# EUROPEAN PATENT APPLICATION

(11) **EP 2 262 235 A1**
(43) Date of publication of application: **15.12.2010**
(21) Application number: 10151463.6
(22) Date of filing: 22.01.2010
(51) Int. Cl.: H04N 5/445, G06F 3/048, G06F 3/033

(54) **Image display device and operation method thereof**

(30) Priority: 01.06.2009 KR 20090048230; 01.06.2009 KR 20090048231
(71) Applicant: LG ELECTRONICS INC., Yeongdeungpo-gu Seoul 150-721 (KR)
(72) Inventor: Cho, Su Yeon, Seoul 137-724 (KR); Kim, Gyu Seung, Seoul 137-724 (KR); Kang, Hyung Suk, Seoul 137-724 (KR); Lee, Jae Kyung, Seoul 137-724 (KR); Lee, Kun Sik, Seoul 137-724 (KR)
(74) Representative: Cabinet Plasseraud

(57) **Abstract**

An image display device and an operation method thereof are provided. An object may be displayed on a display. A display characteristic of the object may be changed when no input for the object is received for a predetermined period of time.

## Description

### CROSS-REFERENCE TO RELATED APPLICATION

This application claims the benefit of Korean Application No.10-2009-0048230, filed on 1 June 2009 and Korean Application No. 10-2009-0048231, filed on 1 June 2009, respectively, in the Korean Intellectual Property Office, the disclosure of which is incorporated herein by reference.

### BACKGROUND

### 1. Field

Embodiment of the present invention may relate to an image display device and an operation method thereof. More particularly, embodiments of the present invention may relate to an image display device for displaying an object without hindering video viewing (or displaying) or implementing an object in various forms using a pointing device.

### 2. Background

An image display device is a device that displays a broadcast signal, a user input signal, a moving picture signal, a signal received from a Web server, etc. on a display. A broadcasting display device may display a user-selected broadcast program based on broadcast signals received from broadcasting stations. Broadcasting is undergoing a transition from analog to digital all over the world.

Compared to analog broadcasting, digital broadcasting may boast of less data loss due to its robustness against external noise, effectiveness in error correction, high resolution and/or clean and clear images, because audio and video signals are digitally transmitted. In addition, digital broadcasting may enable interactive services, unlike analog broadcasting.

The transition from analog broadcasting to digital broadcasting and increasing user demands may be a driving force behind an increase in the number of broadcasting channels. Thus, objects for displaying paths by which to immediately provide user-intended information or directly invoke predetermined functions are more frequently displayed.

However, displayed objects may hinder a user's video viewing. Accordingly, many techniques have been developed including a user interface for efficiently controlling an image display device and increasing a user convenience.

A remote control device (such as a remote controller) separated from an image display device may be used to operate the image display device. Owing to the diversification of operations of the image display device, more functions may be required for the remote control device. In this context, a variety of techniques have been studied to increase user convenience in an image display device using a remote control device.

### BRIEF DESCRIPTION OF THE DRAWINGS

Arrangements and embodiments may be described in detail with reference to the following drawings in which like reference numerals refer to like elements and wherein:

FIG. 1 is a block diagram of an image display device according to an exemplary embodiment of the present invention;

FIGs. 2A and 2B are frontal perspective views of an image display device and a pointing device according to an exemplary embodiment of the present invention;

FIG. 3 is a block diagram of the pointing device and an interface of an image display device according to an exemplary embodiment of the present invention;

FIG. 4 is a flowchart illustrating a method for operating an image display device according to an exemplary embodiment of the present invention;

FIGs. 5A to 9C illustrate screens having images displayed according to a method for operating an image display device according to an exemplary embodiment of the present invention;

FIG. 10 is a flowchart illustrating a method for operating an image display device according to an exemplary embodiment of the present invention;

FIG. 11 is a flowchart illustrating a method for operating an image display device according to an exemplary embodiment of the present invention;

FIG. 12 is a flowchart illustrating a method for operating an image display device according to an exemplary embodiment of the present invention;

FIGs. 13A to 14B illustrate screens having images displayed according to a method for operating an image display device according to an exemplary embodiment of the present invention;

FIGs. 15A, 15B and 16 illustrate screens having images displayed according to a method for operating an image display device according to an exemplary embodiment of the present invention; and

FIGs. 17A and 17B illustrate screens having images displayed according to a method for operating an image display device according to an exemplary embodiment of the present invention.

### DETAILED DESCRIPTION

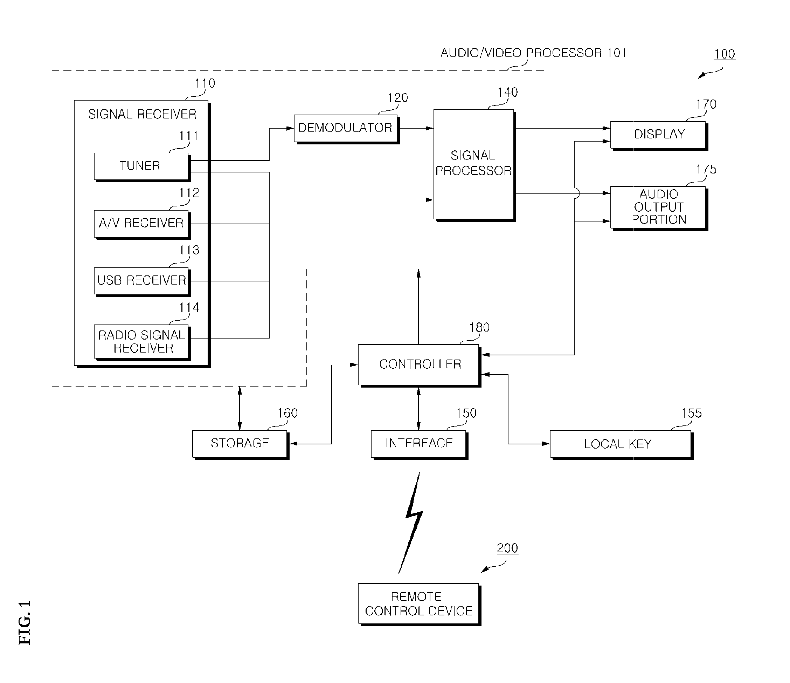

FIG. 1 is a block diagram of an image display device according to an exemplary embodiment of the present invention. Other embodiments and configurations may also be within the scope of the present invention.

FIG. 1 shows an image display device 100 that may include an audio/video processor 101, an interface 150, a local key 155, a storage 160 (or memory), a display 170, an audio output portion 175, and a controller 180.

The audio/video processor 101 may process a received audio or video signal so as to output audio or video to the audio output portion 175 and/or the display 170. The audio/video processor 101 may include a signal receiver 110, a demodulator 120 and a signal processor 140. The signal receiver 110 may include a tuner 111, an Audio/Visual (A/V) receiver 112, a Universal Serial Bus (USB) receiver 113 and a Radio signal receiver 114.

The tuner 111 may select an RF broadcast signal of a user-selected channel from among a plurality of RF broadcast signals received through an antenna and downconvert the selected RF broadcast signal to an Intermediate Frequency (IF) signal or a baseband audio or video signal. For example, if the selected RF broadcast signal is a digital broadcast signal, the tuner 111 may downconvert the RF broadcast signal to a Digital IF (DIF) signal. If the selected RF broadcast signal is an analog broadcast signal, the tuner 111 may downconvert the RF broadcast signal to an analog baseband video or audio signal (Composite Video Banking Sync (CVBS)/Sound Intermediate Frequency (SIF)). That is, the tuner 111 may process a digital or analog broadcast signal. The analog baseband video or audio signal (CVBS/SIF) may be provided directly to the signal processor 140.

The tuner 111 may receive a single-carrier RF broadcast signal based on Advanced Television System Committee (ATSC) and/or a multi-carrier RF broadcast signal based on Digital Video Broadcasting (DVB).

The image display device 100 may include at least two tuners. Like a first tuner, a second tuner may select an RF broadcast signal of a user-selected channel from among RF broadcast signals received through the antenna and downconvert the selected RF broadcast signal to an IF signal or a baseband video or audio signal.

The second tuner may sequentially select RF signals of all broadcast channels that have been stored by a channel memory function from among received RF broadcast signals and downconvert the selected RF signals to IF signals or baseband video or audio signals. The second tuner may perform the downconversion of the RF signals of all broadcast channels periodically. The image display device 100 may provide video signals of a plurality of channels downconverted by the second tuner in thumbnails, while displaying the video of a broadcast signal downconverted by the first tuner. The first tuner may downconvert a user-selected main RF broadcast signal to an IF signal or a baseband video or audio signal, and the second tuner may select all RF broadcast signals except for the main RF broadcast signal sequentially/periodically and downconvert the selected RF broadcast signals to IF signals or baseband video or audio signals.

The demodulator 120 may demodulate the DIF signal received from the tuner 111. For example, if the DIF signal is an ATSC signal, the demodulator 120 may demodulate the DIF signal by 8-Vestigal Side Band (8-VSB). In another example, if the DIF signal is a DVB signal, the demodulator 120 may demodulate the DIF signal by Coded Orthogonal Frequency Division Multiple Access (COFDMA) demodulation.

The demodulator 120 may further perform channel decoding. For the channel decoding, the demodulator 120 may include a Trellis decoder, a deinterleaver and a Reed Solomon decoder for Trellis decoding, deinterleaving and Reed Solomon decoding, respectively.

After the demodulation and channel decoding, the demodulator 120 may output a Transport Stream (TS) signal. A video signal, an audio signal or a data signal may be multiplexed in the TS signal. For example, the TS signal may be a Moving Picture Experts Group-2 (MPEG-2) TS having an MPEG-2 video signal and a Dolby AC-3 audio signal multiplexed. More specifically, the MPEG-2 TS may include a 4-byte header and a 184-byte payload.

The TS signal may be provided to the signal processor 140. The signal processor 140 may demultiplex and process the TS signal and output a video signal to the display 170 and an audio signal to the audio output portion 175.

An image display device having at least two tuners may have a similar number of demodulators. Additionally, a demodulator may be separately provided for each of ATSC and DVB.

The signal receiver 110 may connect the image display device 100 to an external device. The external device may be an audio or video output device such as a DVD player, a radio, an audio player, an MP3 player, a camera, a camcorder, a game player, etc. The signal receiver 110 may provide an audio, video or data signal received from the external device to the signal processor 140 for processing the video and audio signals in the image display device 100.

In the signal receiver 110, the A/V receiver 112 may include a CVBS port, a component port, a S-video port (analog), a Digital Visual Interface (DVI) port, a High Definition Multimedia Interface (HDMI) port, a Red, Green, Blue (RGB) port, a D-SUB port, an Institute of Electrical and Electronics Engineers (IEEE) 1394 port, an Sony/Phillips Digital InterFace (SPDIF) port, a Liquid HD port, etc. in order to provide audio and video signals received from the external device to the image display device 100. Analog signals received through the CVBS port and the S-video port may be provided to the signal processor 140 after analog-to-digital conversion. Digital signals received through the other input ports may be provided to the signal processor 140 without analog-to-digital conversion.

The USB receiver 113 may receive audio and video signals through the USB port.

The radio signal receiver 114 may connect the image display device 100 to a wireless network. The image display device 100 may access a wireless Internet through the radio signal receiver 114. For connection to the wireless Internet, a communication standard may be used, such as Wireless Local Area Network (WLAN) (Wi-Fi), Wireless Broadband (WiBro), Worldwide Interoperability for Microwave Access (Wimax), High Speed Downlink Packet Access (HSDPA), etc. The radio signal receiver 114 may conduct short-range communications with another electronic device. For example, the radio signal receiver 114 may be networked to another electronic device by a communication standard like Bluetooth, Radio Frequency Identification (RFID), InfraRed Data Association (IrDA), Ultra Wideband (UWB), ZigBee, etc.

The signal receiver 110 may connect the image display device 100 to a set-top box (or similar type of device). For example, if the set-top box operates for Internet Protocol (IP) TV, the signal receiver 110 may transmit an audio, video or data signal received from the IPTV set-top box to the signal processor 140 and a processed signal received from the signal processor 140 to the IP TV set-top box.

The signal processor 140 may demultiplex a received TS signal (e.g. an MPEG-2 TS) into an audio signal, a video signal and a data signal. The signal processor 140 may also process the demultiplexed video signal. For example, if the demultiplexed video signal was coded, the signal processor 140 may decode the video signal. More specifically, if the demultiplexed video signal is an MPEG-2 coded video signal, an MPEG-2 decoder may decode the video signal. If the demultiplexed video signal was coded in compliance with H.264 for Digital Multimedia Broadcasting (DMB) or Digital Video Broadcasting-Handheld (DVB-H), an H.264 decoder may decode the video signal.

The signal processor 140 may control brightness, tint, and/or color for the video signal. The video signal processed by the signal processor 140 may be displayed on the display 170.

The signal processor 140 may also process the demultiplexed audio signal. For example, if the demultiplexed audio signal was coded, the signal processor 140 may decode the audio signal. More specifically, if the demultiplexed audio signal is an MPEG-2 coded audio signal, an MPEG-2 decoder may decode the audio signal. If the demultiplexed audio signal was coded in compliance with MPEG 4 Bit Sliced Arithmetic Coding (BSAC) for terrestrial DMB, an MPEG 4 decoder may decode the audio signal. If the demultiplexed audio signal was coded in compliance with MPEG 2 Advanced Audio Codec (AAC) for satellite DMB or DVB-H, an AAC decoder may decode the audio signal.

The signal processor 140 may control base, treble, and/or volume for the audio signal. The audio signal processed by the signal processor 140 may be provided to the audio output portion 175.

The signal processor 140 may also process the demultiplexed data signal. For example, if the demultiplexed data signal was coded, the signal processor 140 may decode the data signal. The coded data signal may be Electronic Program Guide (EPG) information including broadcasting information such as starts, ends, etc. of broadcast programs of each channel. For example, the EPG information may be ATSC-Program and System Information Protocol (ATSC-PSIP) information in case of ATSC. For DVB, the EPG information may include DVB-Service Information (DVB-SI). The ATSC-PSIP information or DVB-SI may be included in the 4-byte header of the above-described TS (i.e. MPEG-2 TS).

The signal processor 140 may display information graphically or in text on the display 170 based on at least one of the processed video and data signals and a user input signal received through a remote control device 200. The remote control device 200 may also be referred to as a pointing device (or remote pointing device).

The signal processor 140 may be incorporate into the controller 180 as a single module.

The storage 160 (or memory) may store programs for signal processing and control operations of the controller 180 and store processed video, audio and/or data signals. The storage 160 may temporarily store video, audio and/or data signals received at the signal receiver 110.

The storage 160 may include a storage medium of at least one type of flash memory, hard disk, multimedia card micro type, card-type memory (e.g. Secure Digital (SD) or eXtreme Digital (XD) memory), Random Access Memory (RAM), and Read Only Memory (ROM) (e.g. Electrically Erasable Programmable ROM (EEPROM)). The image display device 100 may reproduce a file stored in the storage 160 (e.g. a moving picture file, a still image file, a music file, a text file, etc.) and provide the reproduced file to the user.

The controller 180 may provide overall control to the image display device 100. The controller 180 may receive a signal from the remote control device 200 via the interface 150. The controller 180 may identify a command input to the remote control device 200 by the received signal and control the image display device 100 based on the command. For example, upon receipt of a predetermined channel selection command from the user, the controller 180 may control the tuner 111 to provide a selected channel through the signal receiver 110. The controller 180 may control the signal processor 140 to process the audio and video signals of the selected channel. The controller 180 may control the signal processor 140 to output user-selected channel information along with the processed audio and video signals to the display 170 and/or the audio output portion 175.

In another example, the user may enter a different-type video and/or audio output command through the remote control device 200. The user may want to view a video signal of a camera or a camcorder received through the USB receiver 113 rather than a broadcast signal. The controller 180 may control the audio/video processor 101 such that an audio or video signal received through the USB receiver 113 of the signal receiver 110 may be processed by the signal processor 140 and output to the display 170 and/or the audio output portion 175.

Besides a command received through the remote control device 200, the controller 180 may identify a user command received through the local key 155 provided to the image display device 100 and control the image display device 100 based on the user command. For example, the user may enter an on/off command, a channel switch command, a volume change command and/or the like for the image display device 100 through the local key 155. The local key 155 may include buttons and/or keys formed in the image display device 100. The controller 180 may determine whether the local key 155 has been manipulated and control the image display device 100 based on the determination.

The controller 180 may incorporate the signal processor 140 as a single module.

The display 170 may display a broadcast image or an object based on a signal received from the controller 180.

The objects may include a variety of menus and/or widgets displayed on the display 170 for entering commands to the image display device 100 and/or for representing information related to the image display device 100.

The objects may refer to images or text indicating information about the image display device 100 or information about an image displayed on the image display device 100 such as an audio output level, channel information, a current time, etc. regarding the image display device 100. The objects may be configured in different forms (e.g. moving pictures) based on the types of information displayable or to be displayed on the image display device 100. The objects do not limit the scope of embodiments of the present invention.

A widget may be a Graphic User Interface (GUI) component that enables a user to directly change particular data.

The object may be one of a volume control button, a channel selection button, a menu, an icon, a navigation tab, a scroll bar, a progress bar, a text box, a window, etc. displayed on the display 170 of the image display device 100. The type of an object configured in the image display device 100 may depend on a specification of a GUI that can or should be implemented in the image display device 100, although the scope of embodiments are not limited thereto.

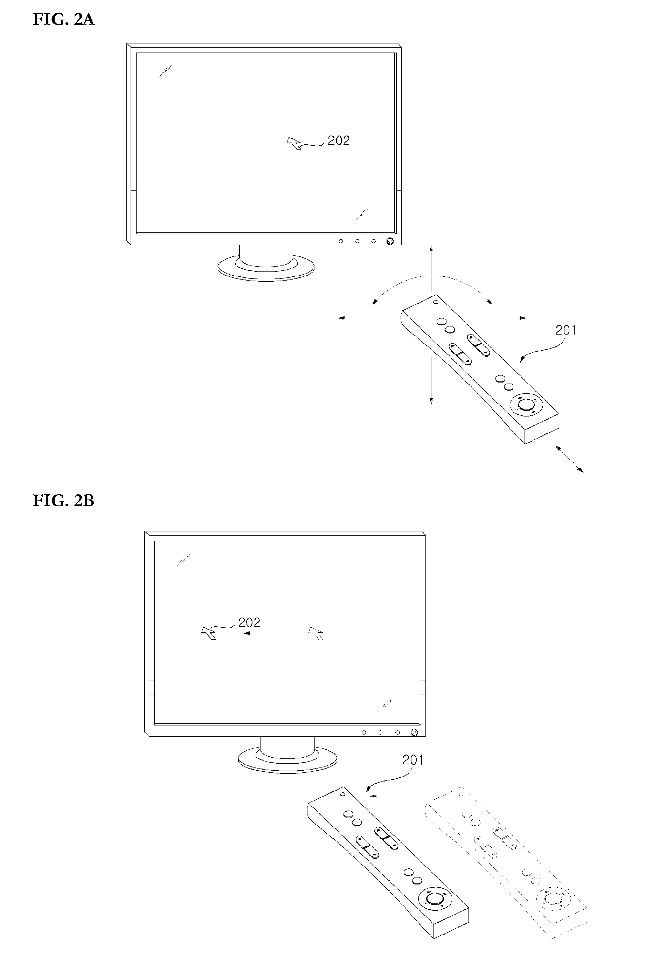

FIGs. 2A and 2B are frontal perspective views of the image display device 100 and a pointing device 201 for entering a command to an image display device 100 according to an exemplary embodiment of the present invention. Other embodiments and configurations may also be within the scope of the present invention.

The pointing device 201 may be a kind of the remote control device 200 for entering a command to the image display device 100. The pointing device 201 may transmit and receive signals to and from the image display device 100 in compliance with an RF communication standard. The remote controller 201 may also be referred to as a pointing device (or remote pointing device). As shown in FIG. 2A, a pointer 202 corresponding to the pointing device 201 may be displayed on the image display device 100.

FIGs. 2A and 2B are frontal perspective views of the image display device 100 and a pointing device 201 for entering a command to the image display device 100 according to the exemplary embodiment of the present invention. The pointing device 201 is a kind of the remote control device 200 for entering a command to the image display device 100. In accordance with the exemplary embodiment of the present invention, the pointing device 201 transmits and receives signals to and from the image display device 100 in compliance with an RF communication standard. As shown in FIG. 2A, a pointer 202 corresponding to the pointing device 201 may be displayed on the image display device 100.

The user may move the pointing device 201 up, down, left, right, forward or backward, and/or rotate the remote controller 201. The pointer 202 may move on the image display device 100 in correspondence with movement and/or rotation of the pointing device 201.

FIG. 2B illustrates movement of the pointer 202 on the image display device 100 based on movement of the remote controller 201. As shown in FIG. 2B, when the user moves the pointing device 201 to the left, the pointer 202 may also move to the left on the image display device 100. The pointing device 201 may include a sensor for sensing movement of the remote controller 201. Information about movement of the pointing device 201 as sensed by the sensor may be provided to the image display device 100. The image display device 100 may determine the movement of the remote controller 201 based on the received information and calculate spatial coordinates of the pointer 202 based on the movement of the remote controller 201.

In FIGs. 2A and 2B, the pointer 202 may move on the image display device 100 in correspondence with an upward, downward, left or right movement and/or rotation of the pointing device 201. The velocity and/or direction of the pointer 200 may correspond to that of the remote controller 201. The pointer 202 may move on the image display device 100 in correspondence with movement of the remote controller 201. A movement of the remote controller 201 may trigger entry of a predetermined command to the image display device 100. If the pointing device 201 may move forward or backward, an image displayed on the image display device 200 may be enlarged and/or contracted (i.e., reduced).

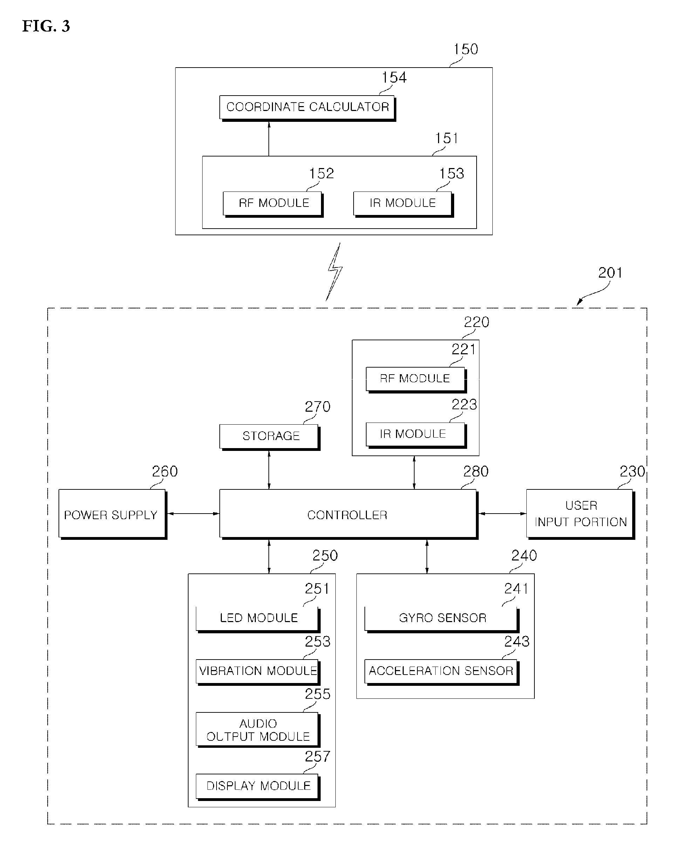

FIG. 3 is a block diagram of the pointing device 201 and the user interface 150 of the image display device 100 according to an exemplary embodiment of the present invention. Other embodiments and configurations may also be within the scope of the present invention.

The pointing device 201 may include a radio signal transceiver 220, a user input portion 230, a sensor portion 240, an output portion 250, a power supply 260, a storage 270 (or memory) and a controller 280.

The radio signal transceiver 220 may transmit and receive signals to and from the image display device 100. The pointing device 201 may be provided with a radio frequency (RF) module 221 for transmitting and receiving signals to and from the interface 201 of the image display device 100 based on an RF communication standard. The pointing device 201 may include an infrared (IR) module 223 for transmitting and receiving signals to and from the interface 201 of the image display device 100 based on an IR communication standard. Accordingly, the remote controller 201 (or the pointing device) may include a first wireless communication module (i.e., the RF module 221) and a second wireless communication module (i.e., the IR module 223).

The pointing device 201 may transmit a signal carrying information about an operation of the pointing device 201 to the image display device 100 through the RF module 221. The pointing device 201 may receive a signal from the image display device 100 through the RF module 221. The pointing device 201 may transmit commands associated with power on/off, channel switching, volume change, etc. to the image display device 100 through the IF module 223.

In one embodiment, the RF module 221 may be used to turn power of the image display device (such as a television) either on or off. In another embodiment, the IR module 223 may be used to turn power of the image display device either on or off. In another embodiment, all wireless communication between the remote controller 201 and the image display device 100 may be performed using the IR module 223.

The user input portion 230 may be configured with a keypad and/or buttons. The user may enter a command related to the image display device 100 to the pointing device 201 by manipulating the user input portion 230. If the user input portion 230 includes hard key buttons, the user may enter commands related to the image display device 100 to the pointing device 201 by pushing the hard key buttons. If the user input portion 230 is provided with a touch screen, the user may enter commands related to the image display device 100 to the pointing device 201 by touching soft keys on the touch screen. The user input portion 230 may have a variety of input means the user can manipulate, such as a scroll key, a zog key, etc.

The sensor portion 240 may include a gyro sensor 241 and/or an acceleration sensor 243. The gyro sensor 241 may sense information about an operation of the pointing device 201. For example, the gyro sensor 241 may sense information about an operation of the pointing device 201 along x, y and z axes. The acceleration sensor 243 may sense information about velocity of the pointing device 201.

The output portion 250 may output a video or audio signal corresponding to a manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 for illuminating when the user input portion 230 has been manipulated or a signal is transmitted to or is received from the image display device 100 through the radio signal transceiver 220, a vibration module 253 for generating vibrations, an audio output module 255 for outputting audio and/or a display module 257 for outputting video.

The power supply 260 may supply power to the pointing device 201. When the pointing device 201 is kept stationary for a predetermined time period, the power supply 260 may block power (or restrict power) for the pointing device 201. When a predetermined key of the pointing device 201 is manipulated, the power supply 260 may resume power supply.

The storage 270 (or memory) may store a plurality of types of programs required for control or operation of the pointing device 201 and/or application data. When the pointing device 201 transmits and receives signals to and from the image display device 100 wirelessly through the RF module 221, the signal transmission and reception may be carried out in a predetermined frequency band. The controller 280 of the pointing device 201 may store information about the frequency band in which to wirelessly transmit and receive signals to and from the image display device 100 paired with the pointing device 201 and refer to the information.

The controller 280 may provide overall control to the pointing device 201. The controller 280 may transmit a signal corresponding to a predetermined key manipulation on the user input portion 230 and/or a signal corresponding to an operation of the pointing device 201 sensed by the sensor portion 240 to the interface 150 of the image display device 100 through the radio signal transceiver 220.

The interface 150 of the image display device 100 may have an radio signal transceiver 151 for wirelessly transmitting and receiving signals to and from the pointing device 201 and a coordinate calculator 154 for calculating spatial coordinates of the pointer 202 corresponding to an operation of the pointing device 210.

The interface 150 may wirelessly transmit and receive signals to and from the pointing device 201 through the RF module 152. The interface 150 may also receive a signal based on an IR communication standard from the pointing device 201 through the IR module 153.

The coordinate calculator 154 may calculate the coordinates (x, y, z) of the pointer 202 to be displayed on the display 170 by correcting handshaking or errors from a signal corresponding to an operation of the pointing device 201 received through the radio signal transceiver 151.

A signal received from the pointing device 201 through the interface 150 may be provided to the controller 180 of the image display device 100. The controller 180 may identify information about an operation of the pointing device 201 or a key manipulation on the pointing device 201 from the received signal and control the image display device 100 based on the information.

In another example, the pointing device 201 may calculate spatial coordinates of the pointer 202 corresponding to its operation and output the coordinates to the interface 150 of the image display device 100. The interface 150 of the image display device 100 may then transmit information about the received coordinates to the controller 180 without correcting handshaking or errors.

FIGs. 1, 2 and 3 illustrate the image display device 100 and the pointing device 201 (as the remote control device 200). Components of the image display device 100 and the pointing device 201 may be integrated or omitted, and/or other components may be added. That is, two or more components may be incorporated into a single component and/or one component may be configured to be divided into two or more separate components. Also, the function of each block is presented for illustrative purposes, and does not limit the scope of embodiments of the present invention.

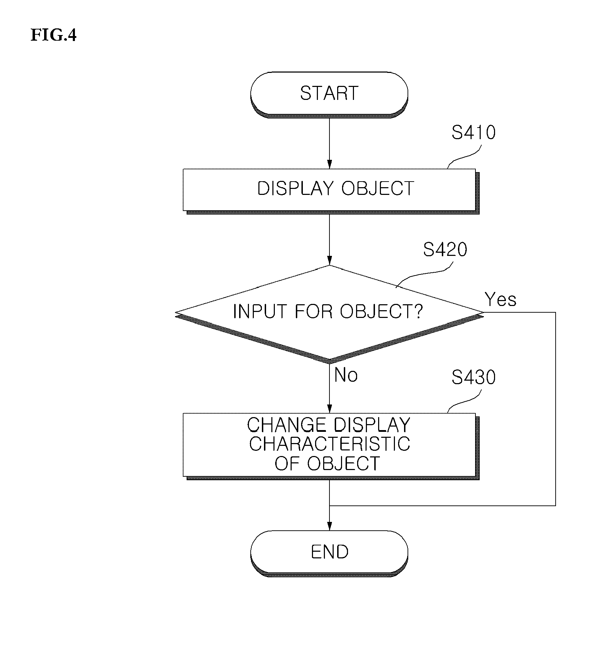

FIG. 4 is a flowchart illustrating a method for operating an image display device according to an exemplary embodiment of the present invention. Other operations, orders of operations, embodiments and configurations may also be within the scope of the present invention.

A method for operating the image display device may include displaying an object on the display in operation S410, determining whether input for the object is received S420, and changing a display state (or display characteristic) of the object when the image is being displayed on the display in operation S430. As one example, a display characteristic of the object may be changed when no input for the object is received for a predetermined amount of time.

The image may be a still image and/or a moving picture.

The object may include various kinds of widgets displayed on the display 170 to enter commands to the image display device 100 and/or to represent information related to the image display device 100. The widgets may be represented as an On Screen Display (OSD).

The objects may include images and/or text indicating information about the image display device 100 or information about an image displayed on the image display device 100 such as an audio output (volume) level, channel information, a current time, etc. regarding the image display device 100. The objects may be configured in different forms (e.g. moving pictures) based on the types of information displayable and/or to be displayed on the image display device 100.

An object may also be a widget. The widget may be a GUI component that enables a user to directly change particular data. For example, the widget may be one of a volume control button, a channel selection button, a menu, an icon, a navigation tab, a scroll bar, a progress bar, a text box, a window, etc. displayed on the display 170 of the image display device 100.

The type of a widget configured in the image display device 100 may depend on the specification of a GUI that can or should be implemented in the image display device 100 although embodiments are not limited thereto.

When no application is running in a computer or a mobile terminal, a user may see an idle screen or the computer or the mobile terminal may be placed in an idle state. In the idle state, an object displayed on the screen may not affect the use of the computer or the mobile terminal. The image display device may display an image in the idle state unless it is in a special occasion such as a menu input screen. Therefore, the image display device, which is supposed to fully display an image and an object set for providing information and invoking a function immediately for the user, may avoid hindering the user's video viewing with the displayed object.

When video is being displayed on the display, or without input for the object is received for a predetermined period of time the display state (or characteristic) of the object may change so that video viewing may be guaranteed without disturbance.

In the object display state (or characteristic) changing operation S430, the controller 180 may gradually change the display state (or characteristic) of the object displayed on the display 170 over time.

For example, transparency of the object may be increased gradually, after a predetermined period of time.. In the displaying the object on the display in operation S410, transparency of the object may be increased gradually with passage of time to prevent the object from hindering the video viewing.

The transparency may be gradually increased to a predetermined value and then kept at the predetermined value or may be gradually decreased. The predetermined value may be a maximum transparency value that indicates a full transparent state of the object.

A size of an object may also be decreased gradually or the size of the object may be decreased gradually to a predetermined size or the size of the object may be increased gradually after the gradual contraction to the predetermined size. As the object gets gradually smaller over time, the object may occupy less area on the display. The predetermined size may be set to zero ("0") indicating a state that the object disappears.

In the object display state (or characteristic) changing operation S430, the display state (or characteristic) of the object may change after a predetermined time after it is displayed. That is, the display state (or characteristic) of the object may change discontinuously a predetermined time later, rather than linearly. The discontinuous change may occur at predetermined time intervals, for example.

For example, in operation S430 the controller 180 may change a size and/or a shape of the object a predetermined time later until the object disappears.

After the predetermined time, the object may be contracted (or reduced), and thereby the object occupies less area on the display. The object may also take the form of an icon, and/or the object may be converted into an icon representing a function of a user-selected object.

The object may also change discontinuously in shape and/or size at predetermined time intervals.

In operation S430, the controller 180 may change a position of the object on the display 170. The controller may move the object to a predetermined peripheral area of the display 170 so that the object may not hinder video viewing (or may reduce the amount of hindrance).

An operation method of the image display device may further include displaying a pointer on the display and re-changing the display state (or characteristic) of the object when the pointer moves to or is in a vicinity of the display area of the object whose display state (or characteristic) has been changed. The pointer may be displayed in correspondence with movement of the pointing device 201.

The operation method may further include updating the object based on object update information received at the image display device 100.

When the image displaying is discontinued or an object recovery command is received, the user may discontinue the video viewing or want to activate the object. The operation method may further include returning the object to the state (or characteristic) before its display state (or characteristic) was changed.

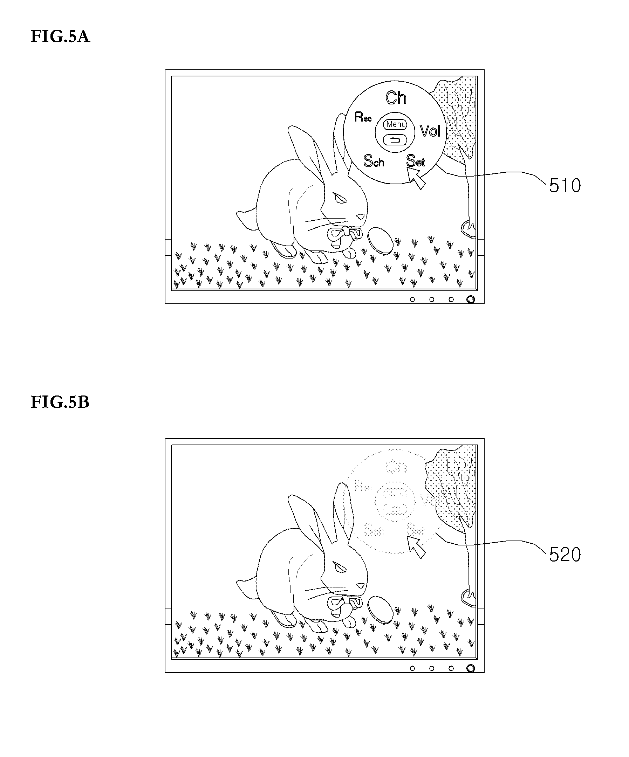

FIGs. 5A to 9C illustrate screens having images displayed in a method for operating an image display device according to an exemplary embodiment of the present invention. Other screens, embodiments and configurations may also be within the scope of the present invention.

[00100] FIGs. 5A and 5B illustrate screens displayed on the display 170 of the image display device 100.

As shown in FIG. 5A, an object 510 may be displayed on the display 170. The controller 180 may determine whether input for the object is received. Without input for the object is received for a predetermined period of time, the controller 180 may change the display state (or characteristic) of the object 510.

While the object 510 is at a minimum transparency value (i.e., in an opaque state in FIG. 5A), the initial transparency of the object 510 may be arbitrarily set to 50%, for example.

FIG. 5B illustrates an object 520 being a display state-changed version of the object 510 with an increased transparency. The transparency may be gradually increased over time and then decreased again to the display state of the object 510 shown in FIG. 5A. The controller 180 may control the display state shown in FIG. 5A to change to the display state shown in FIG. 5B a predetermined time later.

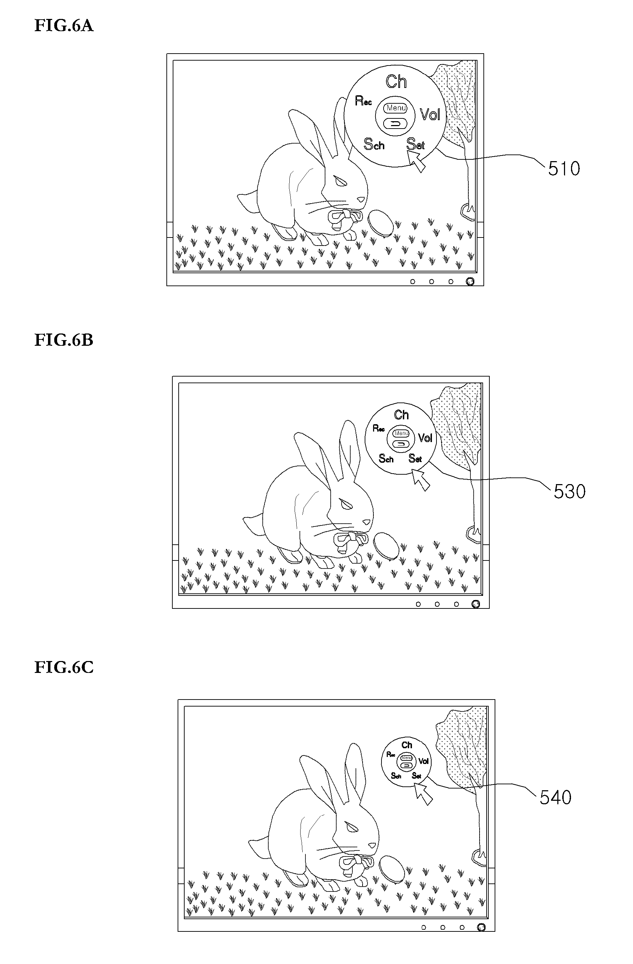

FIGs. 6A, 6B and 6C illustrate screens displayed on the display 170 of the image display device 100.

As shown in FIG. 6A, the object 510 may be displayed on the display 170. The initial size of the object 510 may be arbitrarily set.

The controller 180 may determine whether input for the object is received. IF no input for the object is received for a predetermined period of time, the controller 180 changes the display characteristic of the object, the controller 180 may change the display state (or display characteristic) of the object 510.

FIG. 6B illustrates an object 530 being a display state-changed version of the object 510 with a decreased size. FIG. 6C illustrates an object 540 being further contracted (or reduced) from the object 530.

The controller 180 may change the object 510 shown in FIG. 6A to the object 530 shown in FIG. 6B by downsizing a predetermined time later. Another predetermined time later, the object 530 shown in FIG. 6B may be further contracted (or reduced) to the object 540 shown in FIG. 6C.

The controller 180 may reduce a size of the object over time. When the object is contracted (or reduced) to a predetermined size, the controller 180 may enlarge the object to the display state (or display characteristic) of the object 510 shown in FIG. 6A.

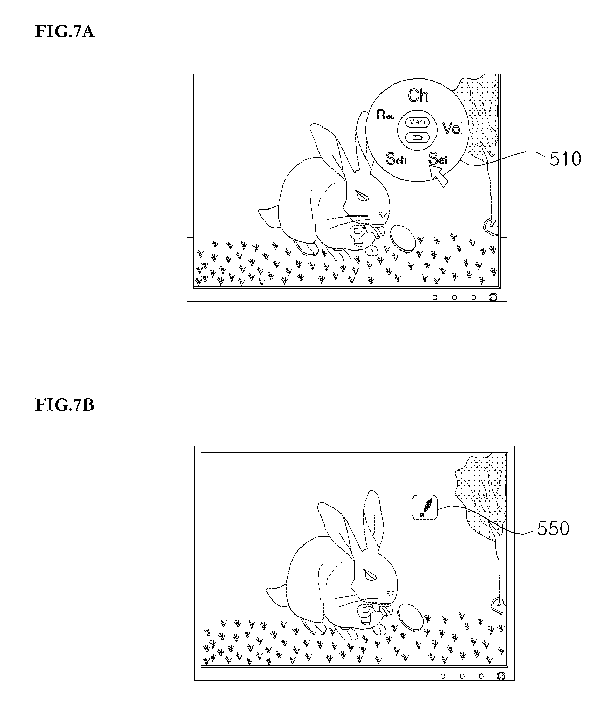

FIGs. 7A and 7B illustrate screens displayed on the display 170 of the image display device 100.

As shown in FIG. 7A, the object 510 is displayed on the display 170.

The controller 180 may determine whether input for the object is received... When no input for the object is received for a predetermined period of time, the controller 180 may change the object 510 in shape and size to an icon 550, for example.

While the icon 550 takes the form of ! in FIG. 7B, it may be a predetermined icon being text or an image corresponding to a command or function of a user-selected object.

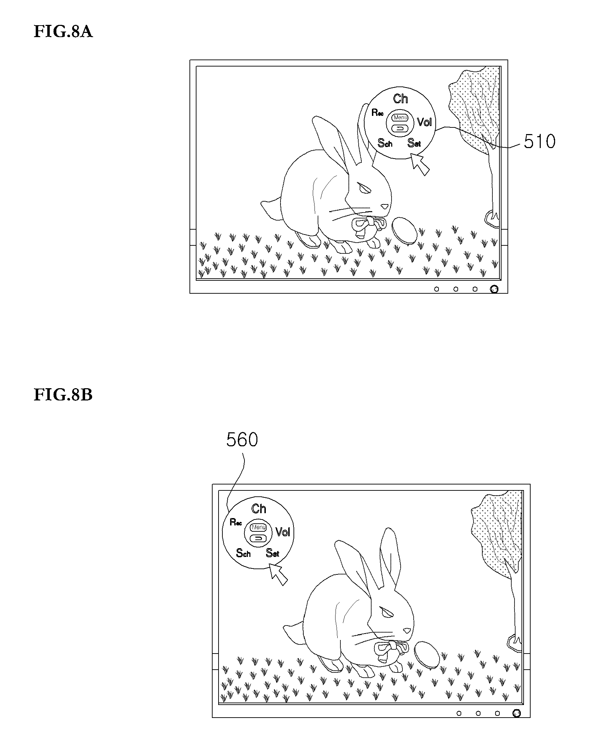

FIGs. 8A and 8B illustrate screens displayed on the display 170 of the image display device 100.

As shown in FIG. 8A, the object 510 may be displayed on the display 170. When no input for the object is received for a predetermined period of time, the controller 180 may shift the object 510 to a particular area at which the object 510 less hinders the user's viewing of the image. The controller 180 may control an object 560 to be displayed in a particular area of the display 170 as shown in FIG. 8B.

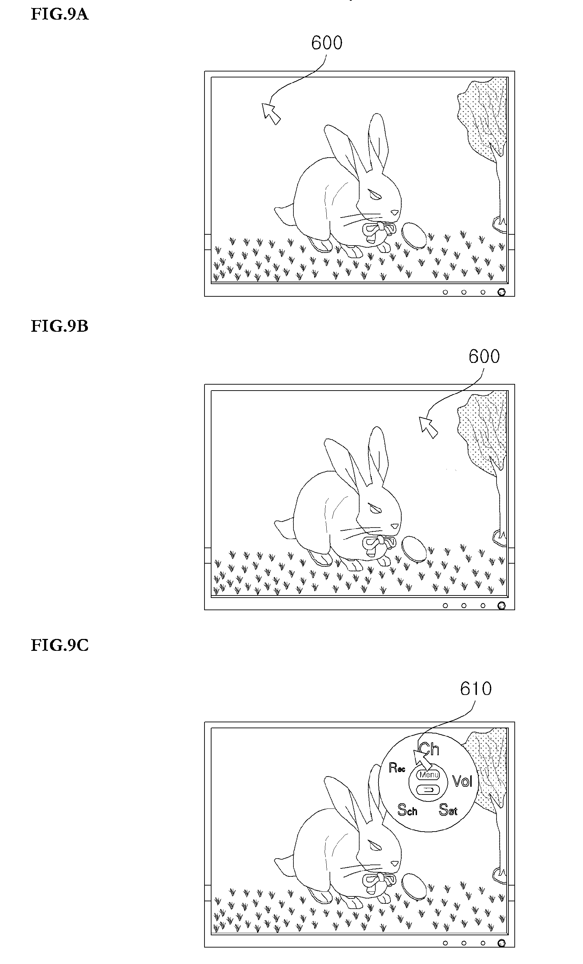

FIGs. 9A, 9B and 9C illustrate screens displayed on the display 170 of the image display device 100.

The method for operating the image display device may include displaying a pointer 600 on the display 170 and re-changing the display state (or characteristic) of the object when the pointer 600 moves to or is in a vicinity of the display area of the object in a changed display state (or changed display characteristic). The pointer 600 may be displayed based on movement of the pointing device 201.

As shown in FIG. 9A, the pointer 600 may be displayed on the display 170. When the pointer 600 moves to or is in the vicinity of the displayed area of an object in a changed display state (or changed display characteristic) in FIG. 9B, the object 610 may be re-changed in its display state (or characteristic) and re-displayed, as shown in FIG. 9C.

In the changed display state (or characteristic) of the object, the object may have a maximum transparency or a size of 0, or the object (or characteristic) may be hidden.

When the user moves the pointer 600 to or in the vicinity of the displayed area of the object in the changed display state (or characteristic), the object 610 may be displayed so that the user may recognize information or invoke a function.

An image display device may include the display 170 for displaying an image and an object and the controller 180 for changing a display characteristic of the object when no input for the object is received for a predetermined period of time.

When no input for the object is received, the display state (or characteristic) of an object is changed, thereby less disturbing a user's video viewing and increasing user convenience in using objects.

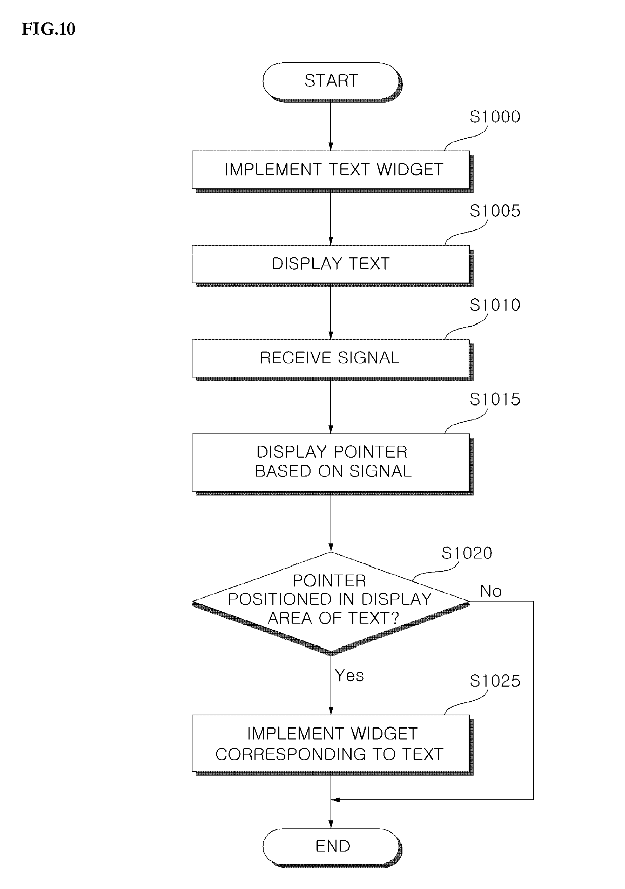

FIG. 10 is a flowchart illustrating a method for operating an image display device according to another exemplary embodiment. Other operations, orders of operation and embodiments may also be within the scope of the present invention

As shown in FIG. 10, the controller 180 may implement a text widget in operation S1000. The text widget may refer to a menu that provides information invoked by implementation of a widget in text. The text widget may be realized as a widget submenu and setting may be changed such that implementation of the widget may trigger implementation of the text widget. Embodiments of the present invention may be applicable to any object that provides object-related information in text as well as a widget.

For example, when a text widget is set, weather information, time information, calendar information, etc. may be displayed as text on the display 170.

In operation S1005, the controller 180 may display the text invoked by implementation of the text widget in a time series. Thus, the information invoked by implementation of the widget may be displayed in text on a part of the display 170. For example, if a broadcast image is displayed on the display 170, the information may be displayed at a boundary of the broadcast image or may be overlaid over the broadcast image. The text may be a scrolling text. In step S1005, the controller 180 displays the text invoked by the implementation of the text widget in a time series.

Time-series displaying of text may mean that parts of the text are sequentially displayed rather than a whole text is displayed on the display 170. When the text is so small as to be displayed wholly on the display 170, all of the text may be displayed on the display 170. For example, if the text is too large to be displayed wholly on the display 170 and it is composed of first, second and third parts, then the first, second and third parts of the text may be sequentially displayed on the display 170. When the third part of the text starts to be displayed, the first part of the text may disappear from the display 170.

A pointing signal corresponding to spatial coordinates of the pointing device may be received from the pointing device 201 in operation S1010. The pointing signal may include values output from the gyro sensor 241 and/or the acceleration sensor 243 of the pointing device 201. When the pointing device 201 is in an active state, the remote controller 201 may continue transmitting pointing signals. The pointing signal corresponding to spatial coordinates of the pointing device may be transmitted together with a selection signal. When a user command is entered through the user input portion 230, the selection signal may be transmitted from the pointing device 201 to the radio signal transceiver 151.

The coordinate calculator 154 may calculate spatial coordinates from the received pointing signal and display the pointer at the calculated coordinates (i.e., in correspondence with the received pointing signal) on the display 170 in operation S1015.

In operation 1020, the controller 180 may determine whether the pointer has been displayed in the display area (also referred to as the displayed area) of the text. When the pointer has been displayed in the display area of the text, the widget corresponding to the text may be implemented and displayed on the display 170 in operation S1025. For example, when text including weather information is displayed in a time series and the pointer points at the display area of the weather information, the controller 180 may implement a widget for providing weather information and display a weather image on the display 170. If weather information, stock information, and/or time information are displayed in a time series and the pointer points at the display area of the stock information, the controller 180 may display a stock graph image on the display 170 by implementing a widget for providing the stock information.

That is, when the user, which is receiving brief information by the text widget, shifts the pointer to the display area of the text, the user may receive details and/or change widget setting, by implementing the widget.

The method may further include determining whether input for the object is received for a predetermined period of time and changing the display state (or characteristic) of an object when no input for the object is received for a predetermined period of time. That is, when no input for the object is received for a predetermined period of time, the controller 180 may change the display state (or characteristic) of the object, as described above.

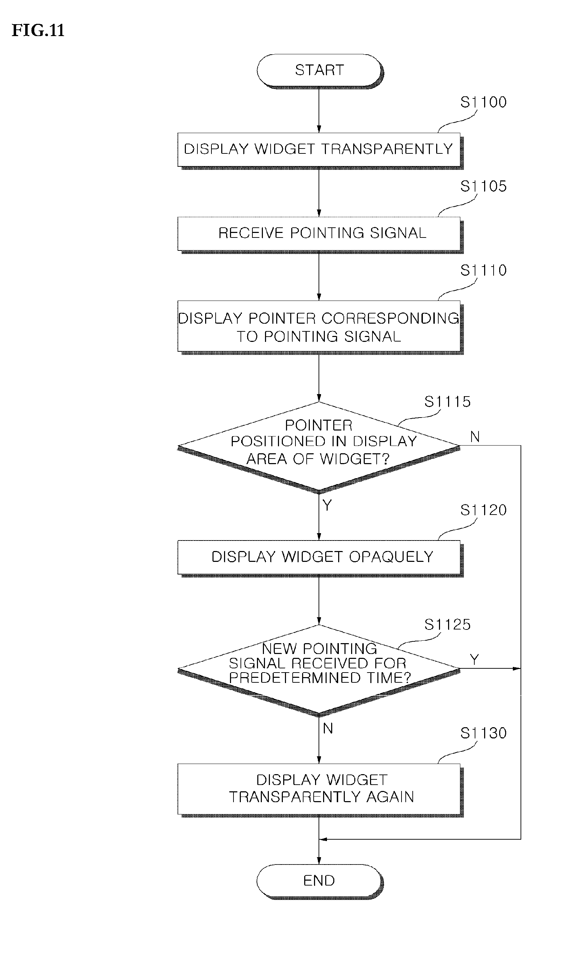

FIG. 11 is a flowchart illustrating a method for operating an image display device according to an exemplary embodiment. Other operations, orders of operation and embodiments may also be within the scope of the present invention.

As shown in FIG. 11, the controller 180 may implement a widget and transparently display an image of the implemented widget on the display 170 in operation S1100. That is, the initial display state (or characteristic) of the object may have a maximum transparency. In operation S1105, a pointing signal may be received from the pointing device 201. The pointing signal may be a signal corresponding to spatial coordinates of the pointing device. The pointing signal may be transmitted together with a selection signal. Embodiments of the present invention may be applicable to any object displayed on the display 170 as well as a widget.

The controller 180 may display the pointer on the display 170 in correspondence with the received pointing signal in operation S1110.

In operation S1115, the controller 180 may determine whether the pointer is positioned at the transparent display area of the widget image. If the pointer is positioned at the transparent display area of the widget image, the controller 180 may render the widget image opaque on the display 170 in operation S1120. If a plurality of widgets has been implemented, the controller 180 may make all of them opaque, or may make only a widget image positioned at the display area of the pointer opaque.

The controller 180 may monitor receipt of a new pointing signal that changes the position of the pointer for a predetermined time in operation S1125. If the new pointing signal has not been received for the predetermined time, the controller 180 may transparently display the opaque widget image again in operation S1130.

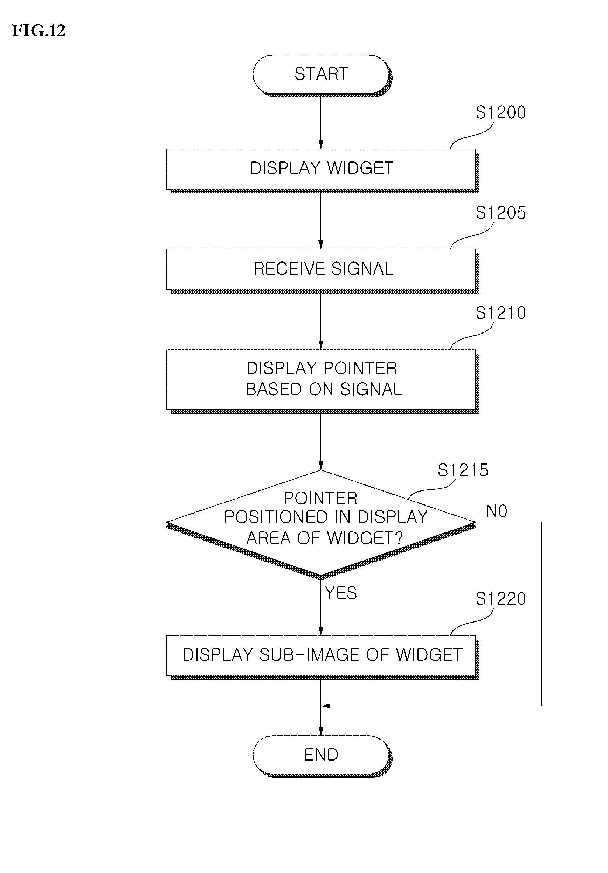

FIG. 12 is a flowchart illustrating a method for operating an image display device according to an exemplary embodiment. Other operations, orders of operation and embodiments may also be within the scope of the present invention.

As shown in FIG. 12, the controller 180 may implement a widget and display an image of the implemented widget on the display 170 in operation S1200. In operation S1205, a pointing signal corresponding to spatial coordinates of the pointing device may be received from the pointing device 201. The pointing signal may be transmitted together with a selection signal. Embodiments of the present invention may be applicable to any object displayed on the display 170 as well as a widget.

In step S1210, the controller 180 displays a pointer based on the received signal. The controller 180 may display the pointer on the display 170 in correspondence with the received pointing signal in operation S1210.

In operation S1215, the controller 180 may determine whether the pointer is positioned at the transparent display area of the widget image. If the pointer is positioned at the transparent display area of the widget image, the controller 180 may display a detailed image related to the implemented widget on the display 170 in operation S1220. The detailed image may include a submenu for changing a setting of the implemented widget, detailed information that may be provided from the implemented widget, etc.

The method for operating the image display device may further include determining whether input for the object is received for a predetermined period of time and changing the display state (or characteristic) of an object when no input for the object is received for a predetermined period of time. That is, when no input for the object is received for a predetermined period of time, the controller 180 may change the display state (or characteristic) of the object, as described above.

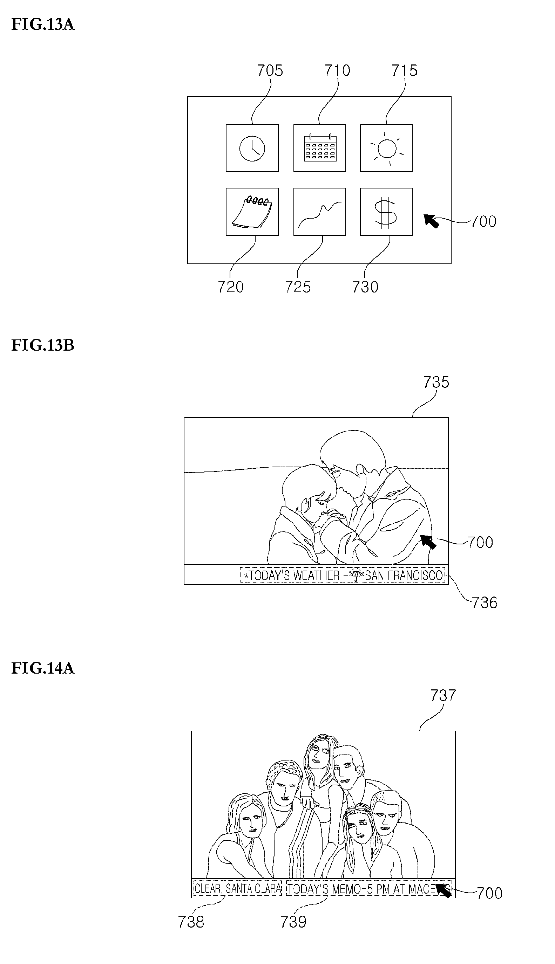

FIGs. 13A to 14B illustrate screens showing a method for operating an image display device according to exemplary embodiments of the present invention. Other screens, embodiments and configurations may also be within the scope of the present invention.

As shown in FIG. 13A, a pointer 700 may be displayed in on the display together with a time widget 705, a date widget 710, a memo widget 720, a stock widget 725 and/or a currency widget 730. A text widget may be set for each widget. The text widget may be a scrolling text

When a text widget is set for the weather widget 705, a weather information text 736 may be displayed in a time series at a boundary of a broadcast image 735 while the broadcast image 735 is being displayed, as shown in FIG. 13B.

When text widgets are set for the weather widget 705 and the memo widget 720, a weather information text 738 and a text 739 of information stored in a memo pad may be sequentially displayed at a boundary of a broadcast image 737, while the broadcast image 737 is being displayed, as shown in FIG. 14A. When the text 739 begins to be displayed, a beginning part of the weather information text 738 may disappear from the display.

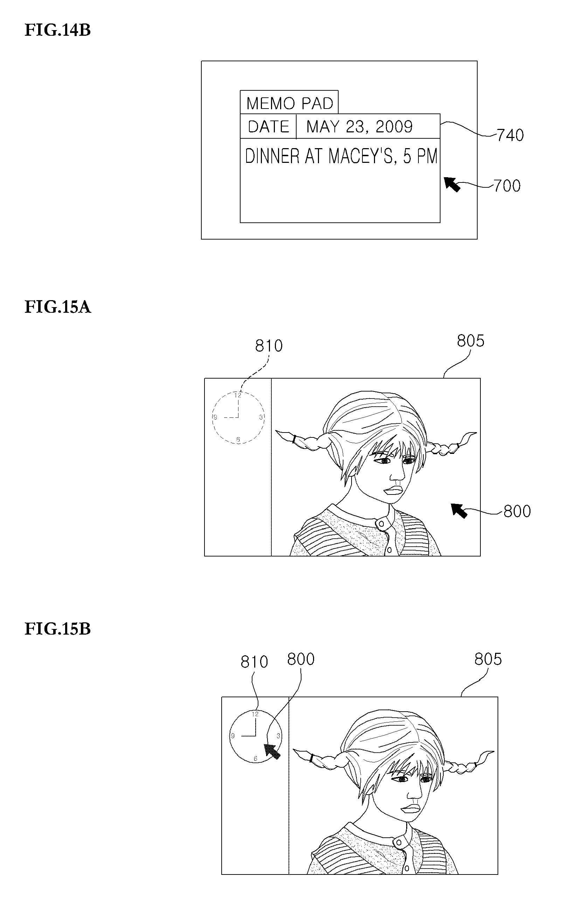

When the pointer 700 corresponding to a pointing signal resides in the display area of the text 739, a widget corresponding to the text 739 (i.e., a memo widget) may be implemented and thus a memo pad image 740 may be displayed, as shown in FIG. 14B. A memo may be modified and/or a memo setting may be changed in the memo pad image 740.

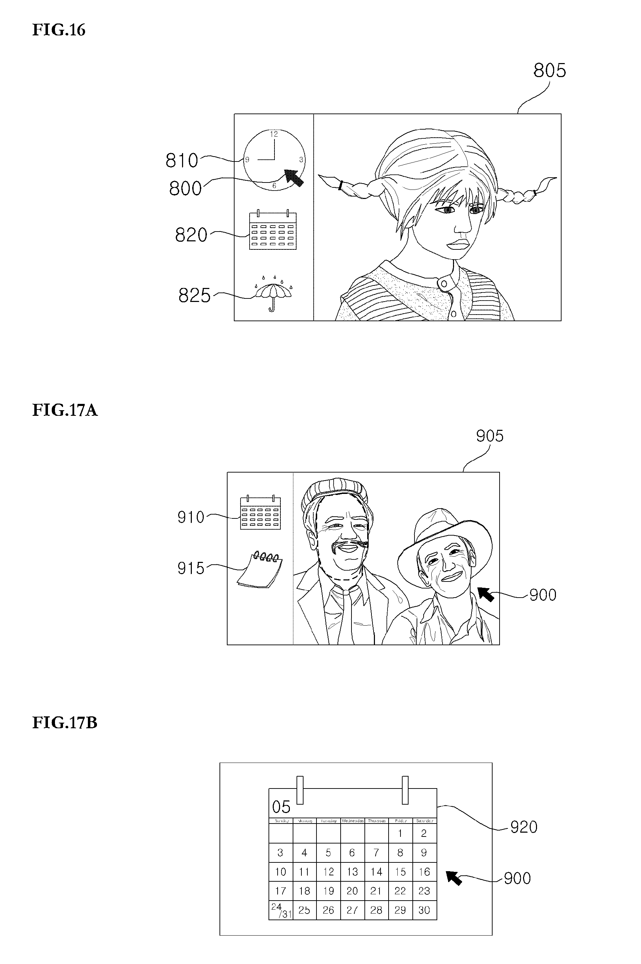

FIGs. 15A, 15B and 16 illustrate screens showing a method for operating an image display device according to an exemplary embodiment of the present invention along. Other screens, embodiments and configurations may also be within the scope of the present invention.

As shown in FIG. 15A, a broadcast image 805 and a pointer 800 may be displayed. As a result of implementing a time widget, a clock image 810 may be transparently displayed. If the pointer 800 is positioned in the transparent display area of the clock image 810, the clock image 810 may be opaquely overlaid on the broadcast image 805.

If the time widget, a date widget and a weather widget are all implemented and the pointer 800 is positioned at the transparent display area of the clock image 810, images of other widgets (i.e., a calendar image 820 and a weather image 825 as well as the clock image 810) may be rendered opaque.

FIGs. 17A and 17B illustrate screens showing a method for operating an image display device according to an exemplary embodiment of the present invention. Other screens, embodiments and configurations may also be within the scope of the present invention.

As shown in FIG. 17A, a broadcast image 905 and a pointer 900 may be displayed. As a result of implementing a date widget and a memo widget, a date image 910 and a memory pad image 915 may be displayed. If the pointer 900 is positioned in the display area of the date image 910, a sub-image of the date widget (i.e., an image 920 for setting or changing weather information in detail) may be displayed.

Embodiments of the present invention may provide an image display device for displaying an object together with a main screen that a user mainly views without hindering the user's viewing, displaying the object in various manners, and/or controlling the object using a pointing device, and an operation method thereof.

A method may be provided for operating an image display device that includes displaying an object on a display, and changing a display state (or characteristic) of the object when no input for the object is received for a predetermined period of time.

A method may be provided for operating an image display device using a pointing device that includes displaying text related to an object in a time series, receiving a pointing signal from the pointing device, displaying a pointer in correspondence with the pointing signal, and performing an operation corresponding to the object when the pointer is displayed in a display area of the text.

A method may be provided for operating an image display device using a pointing device that includes displaying an object, receiving a pointing signal from the pointing device, displaying a pointer in correspondence with the pointing signal, and displaying an image related to the object when the pointer is displayed in a display area of the object.

Embodiments may also be embodied as processor-readable codes on a processor-readable recording medium provided in an image display device. The processor-readable recording medium may be any data storage device that can store data that can thereafter be read by a process. Examples of the processor-readable recording medium may include, but are not limited to, optical data storages such as ROM, RAM, CD-ROMs, magnetic tapes, floppy disks, optical data storage devices, and carrier waves (such as data transmission through the Internet via wired or wireless transmission paths). The processor-readable recording medium may also be distributed over network-coupled computer systems so that the processor-readable code is stored and executed in a distributed fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image display device, comprising:
displaying an object on a display; and
changing a display characteristic of the object when no input for the object is received for a predetermined period of time.

2. The method according to claim 1, wherein the changing comprises increasing transparency of the object over time, increasing the transparency of the object to a predetermined value over time or increasing the transparency of the object and then decreasing the transparency of the object.

3. The method according to claim 1, wherein the changing comprises decreasing a size of the object over time, decreasing the size of the object to a predetermined size over time or decreasing the size of the object and then increasing the size of the object.

4. The method according to claim 1, wherein the changing comprises removing the object from the display after the predetermined time elapses.

5. The method according to claim 1, wherein the changing comprises changing a display area of the object on the display.

6. The method according to claim 1, further comprising:
displaying a pointer on the display based on a pointing device; and
re-changing the display characteristic of the object when the pointer moves to or is in a vicinity of a display area of the object.

7. The method according to claim 1, further comprising:
returning the display characteristic of the object to a characteristic before the changing of the display characteristic when the displaying of the object is discontinued or an object recovery command is received.

8. The method according to claim 1, further comprising:
displaying, on a display, a text related to the object;
receiving a signal corresponding to spatial coordinates of a pointing device;
displaying a pointer on the display based on the received signal; and
performing an operation corresponding to the object when the pointer is positioned in an area of the displayed text.

9. The method according to claim 8, wherein the text includes scrolling text.

10. The method according to claim 8, wherein the text includes information provided when the operation corresponding to the object is performed.

11. The method according to claim 8, wherein the text is displayed in part of the display.

12. The method according to claim 8, wherein the receiving comprises receiving the signal together with a selection signal.

13. The method according to claim 1, further comprising:
receiving a signal corresponding to spatial coordinates of a pointing device;
displaying a pointer on the display based on the received signal; and
displaying information related to the object when the pointer is positioned in a display area of the object.

14. The method according to claim 13, wherein the object includes one of a submenu for changing a setting of the object and detailed information that can be provided.

15. The method according to claim 13, wherein the receiving comprises receiving the signal together with a selection signal.

## Amended claims

### Amended claims in accordance with Rule 137(2) EPC.

**1.** A method for operating an image display device (100), comprising:
displaying an object (510; 705 - 730; 810; 910) on a display (170) ; and
changing a display characteristic of the object when no input for the object is received for a predetermined period of time and while an image is being displayed on the display.

**2.** The method according to claim 1, wherein the changing comprises increasing gradually transparency of the object over time, increasing gradually the transparency of the object to a predetermined value over time or increasing gradually the transparency of the object and then decreasing gradually the transparency of the object.

**3.** The method according to claim 1, wherein the changing comprises decreasing gradually a size of the object over time, decreasing gradually the size of the object to a predetermined size over time or decreasing gradually the size of the object and then increasing gradually the size of the object.

**4.** The method according to claim 1, wherein the changing comprises removing the object from the display (170) after the predetermined time elapses.

**5.** The method according to claim 1, wherein the changing comprises changing a display area of the object on the display (170).

**6.** The method according to claim 1, further comprising:
displaying a pointer (600) on the display based on a pointing device; and
re-changing the display characteristic of the object (510) when the pointer moves to or is in a vicinity of a display area of the object.

**7.** The method according to claim 1, further comprising:
returning the display characteristic of the object to a characteristic before the changing of the display characteristic when the displaying of the image is discontinued or an object recovery command is received.

**8.** The method according to claim 1, further comprising:
displaying, on a display (170), a text (736; 738; 739) related to the object (715-730);
receiving a signal corresponding to spatial coordinates of a pointing device (201);
displaying a pointer (700) on the display based on the received signal; and
performing an operation corresponding to the object when the pointer is positioned in an area of the displayed text.

**9.** The method according to claim 8, wherein the text includes scrolling text.

**10.** The method according to claim 8, wherein the text includes information provided when the operation corresponding to the object is performed.

**11.** The method according to claim 8, wherein the text is displayed in part of the display.

**12.** The method according to claim 8, wherein the receiving comprises receiving the signal together with a selection signal.

**13.** The method according to claim 1, further comprising:
receiving a signal corresponding to spatial coordinates of a pointing device (201);
displaying a pointer (800; 900) on the display (170) based on the received signal; and
displaying information related to the object when the pointer is positioned in a display area of the object.

**14.** The method according to claim 13, wherein the object includes one of a submenu for changing a setting of the object and detailed information that can be provided.

**15.** The method according to claim 13, wherein the receiving comprises receiving the signal together with a selection signal.
